Europäisches Patentamt

European Patent Office

Office européen des brevets

(19)

(11) **EP 0 572 584 B1**

(12) **EUROPÄISCHE PATENTSCHRIFT**

(45) Veröffentlichungstag und Bekanntmachung des Hinweises auf die Patenterteilung:
**25.09.1996 Patentblatt 1996/39**

(21) Anmeldenummer: 92923319.5

(22) Anmeldetag: **19.11.1992**

(51) Int Cl.⁶: **F02D 41/36**

(86) Internationale Anmeldenummer:
**PCT/DE92/00964**

(87) Internationale Veröffentlichungsnummer:
**WO 93/12333 (24.06.1993 Gazette 1993/15)**

(54) **GEBERANORDNUNG EINER BRENNKRAFTMASCHINE MIT ZYLINDER- ERKENNUNG**

TRANSMITTER ARRANGEMENT FOR CYLINDER RECOGNITION IN AN INTERNAL COMBUSTION ENGINE

SYSTEME DE CAPTEURS POUR L'IDENTIFICATION DES CYLINDRES DANS UN MOTEUR A COMBUSTION INTERNE

(84) Benannte Vertragsstaaten:
**DE FR GB IT SE**

(30) Priorität: **18.12.1991 DE 4141713**

(43) Veröffentlichungstag der Anmeldung:
**08.12.1993 Patentblatt 1993/49**

(73) Patentinhaber: **ROBERT BOSCH GMBH**
**70442 Stuttgart (DE)**

(72) Erfinder:
• **OTT, Karl**
**D-7145 Markgroeningen (DE)**

• **DENZ, Helmut**
**D-7000 Stuttgart 1 (DE)**
• **FLAETGEN, Dietmar**
**D-7143 Vaihingen/Enz (DE)**

(56) Entgegenhaltungen:
**EP-A- 0 371 158**    **DE-A- 3 608 321**
**FR-A- 2 637 652**    **US-A- 4 284 052**

• **PATENT ABSTRACTS OF JAPAN vol. 13, no. 380 (M-863) 23. August 1989 & JP-A-11 34 069 (FUJI HEAVY IND. LTD.) 25. Juni 1989**

**Beschreibung**

Stand der Technik

Die Erfindung betrifft eine Geberanordnung einer Brennkraftmaschine mit mit Zylindererkennung n Zylindern nach der Gattung des Hauptanspruchs.

Es ist bekannt, daß sich bei einer Viertakt-Brennkraftmaschine die Kurbelwelle je Arbeitsspiel zweimal dreht und also einen Winkel von 720 Grad überstreicht, bevor ein bestimmter Zylinder wieder die gleiche Arbeitsstellung einnimmt. Um die momentane Stellung eines Zylinders zu erfassen, reicht es daher nicht aus, die Winkelposition der Kurbelwelle innerhalb einer Umdrehung zu bestimmen, vielmehr muß erfaßt werden, ob sich die Brennkraftmaschine gerade in der ersten oder in der zweiten Hälfte des Arbeitsspieles, entsprechend der ersten oder zweiten Kurbelwellenumdrehung befindet.

Dazu ist es beispielsweise aus der EP 0 371 158 bekannt, neben einem Kurbelwellengeber noch einen statischen Nockenwellengeber vorzusehen, dessen periodisches Ausgangssignal aus zwei unterscheidbaren Teilsignalen besteht, die sich abwechselnd über je eine volle Kurbelwellendrehung erstreckt. Ein Kurbelwellengeber liefert zusätzlich ein Referenzsignal je Kurbelwelle, durch das eine bekannte Winkelposition, die Synchronisationsposition bestimmt ist. Erst nach dem Erkennen des Referenzimpulses ist in Verbindung mit dem Nockenwellensignal die Stellung der Zylinder der Brennkraftmaschine genau bekannt und eine Synchronisation der Zündung bzw. Einspritzung kann erfolgen.

Nach dem Start der Brennkraftmaschine kann demnach im ungünstigsten Fall eine volle Kurbelwellendrehung vergehen, bis die Synchronisationsposition erstmals erreicht wird. Da erst nach der Synchronisation in die einzelnen Zylinder taktrichtig Kraftstoff eingespritzt werden kann, wird beim bekannten Verfahren zur Vermeidung einer verlängerten Startphase durch fehlende Einspritzung während der ersten Kurbelwellenumdrehung eine erste Zylindergruppe bestimmt, in die unter Auswertung des ersten Teilsignals des Nockenwellengebers nach dem Start zunächst eingespritzt wird. Nach einem Signalwechsel des vom Nockenwellengeber gelieferten Signales wird auch in die zweite Zylindergruppe eingespritzt.

Das bekannte Verfahren zeigt demnach eine Möglichkeit, wie die Einspritzung unmittelbar nach dem Start der Brennkraftmaschine verbessert werden kann, eine schnellere Zylindererkennung wird dabei nicht erreicht, sie ist in diesem Fall auch nicht unbedingt erforderlich.

Aus der DE-OS 36 08 321 ist eine Einrichtung zum Erfassen der zylinderbezogenen Kurbelwellenstellung eines Viertaktmotors mit einer Zylinderzahl n bekannt, bei der ein mit der Kurbelwelle verbundener Signalgeber umfangsmäßig in n/2 gleich große Signalmarkenabschnitte mit je einer Kennungsmarke unterteilt ist und ein mit der Nockenwelle verbundener Signalgeber in n/2 oder n gleich große Signalabschnitte unterteilt ist, deren gleichmäßige Teilungen voneinander abweichen. Durch einen mittels der Kennungsmarken synchronisierten Impulsvergleich der beiden Signalgeber kann gleich nach dem Motorstart eine Zylinderzuordnung der Kurbelwellenposition erfolgen. Ein Nachteil dieser Einrichtung besteht darin, daß der Abstand zwischen gleichartigen Winkelmarkenflanken des Nockenwellengebers uneinheitlich ist, so daß er nicht geeignet ist, als Triggermarke verwendet zu werden, dies ist insbesonders dann nachteilig, wenn bei defektem Kurbelwellengeber ein Notlauf realisisert werden soll.

Die Druckschrift FR-A-2 637 652 zeigt eine Geberanordnung bei einer Brennkraftmaschine mit Zylindererkennung, bei der ein Sensosr eine mit der Nockenwelle verbundene Scheibe mit einer Anzahl von Marken, die der Zylinderzahl entspricht, abtastet. Die Marken weisen dabei zwei unterschiedliche Längen auf, weiterhin sind zwei unterschiedlich lange Zwischenräume vorhanden.

Vom Sensor wird ein Signal erzeugt, mit Bereichen, die "High" sind und mit "Low"-Bereichen. Die Abstände von je zwei "High-Low"-Über-gängen sind immer gleich 90° (NW).

Ein weiterer Sensor tastet eine mit der Kurbelwelle verbundene Scheibe mit einer Vielzahl gleichartiger Marken und einer singulären Marke ab. Die beiden Sensoranordnungen sind so angeordnet, daß während einer Kurbelwellenumdrehung das zur singulären Marke gehörende Signal in eine Phase des Nockenwellensensorsignales und während der anderen Kurbelwellendrehung in die andere Phase des Nockenwellensensorsignales fällt.

Der Erfindung liegt die Aufgabe zugrunde, eine Geberanordnung bei einer Brennkraftmaschine mit Zylindererkennung so aufzubauen, daß eine zuverlässige und nach dem Start der Brennkraftmaschine besonders schnelle Zylindererkennung möglich ist. Gelöst wird diese Aufgabe mit einer Geberannordnung mit den Merkmalen des Anspruchs 1.

Vorteile der Erfindung

Die erfindungsgemäße Geberanordnung einer Brennkraftmaschine mit Zylindererkennung mit n Zylindern mit den kennzeichnenden Merkmalen des Hauptanspruchs hat demgegenüber den Vorteil, daß unmittelbar nach dem Start der Brennkraftmaschine eine besonders schnelle und zuverlässige Zylindererkennung erfolgt, da die Verknüpfung von Kurbelwellen- und Nockenwellengebersignal infolge der vorteilhaften Gestaltung der Nockenwellenscheibe eindeutig identifizierbare Pulsfolgen liefert.

Eine sofortige Zylindererkennung ist in vorteilhafter Weise möglich, da sich die Pulsfolge des Nockenwellengenbersignales während der ersten Kurbelwellenumdrehung von der Pulsfolge während der zweiten Kurbelwellenumdrehung eindeutig unterscheidet.

Die besondere Gestaltung der Nockenwellengeberscheibe gewährleistet, daß eine der Impulsflanken, beispielsweise die Rückflanke für alle Marken im gleichen Abstand, bezogen auf die Kurbelwelle, auftritt. Dies ermöglicht in besonders vorteilhafter Weise einen Notlauf der Brennkraftmaschine für den Fall, daß der Kurbelwellengeber defekt ist.

Weitere vorteilhafte Ausgestaltungen der erfindungsgemäßen Geberanordnung sind in den Unteransprüchen angegeben.

## Zeichnung

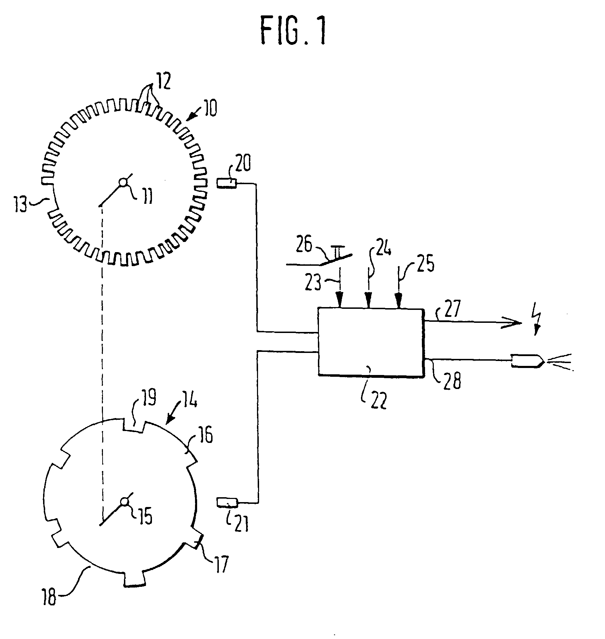

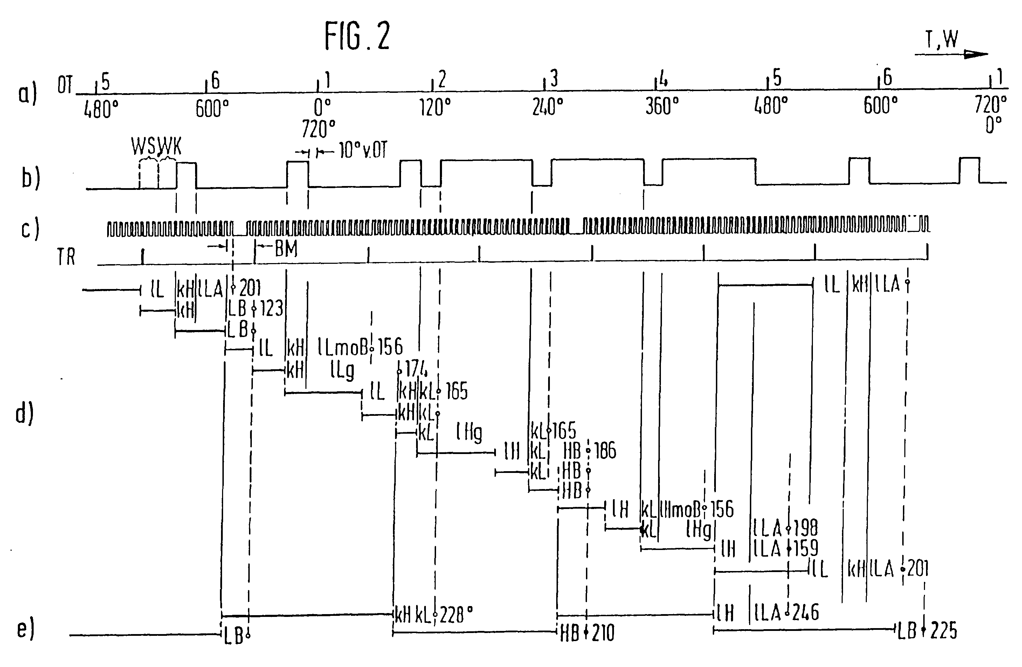

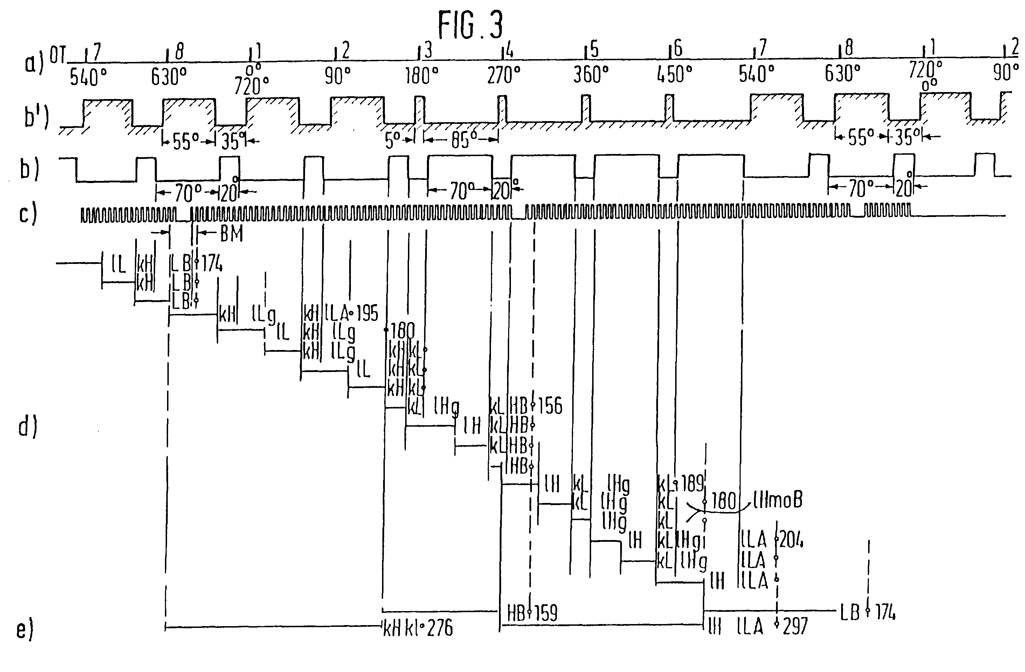

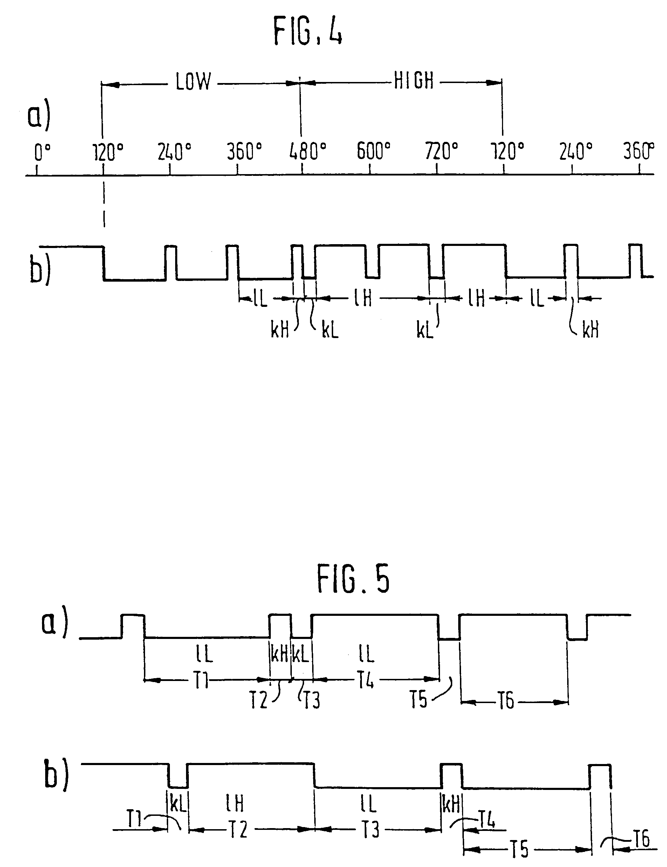

Die Erfindung ist in der Zeichnung dargestellt und wird in der nachfolgenden Beschreibung näher erläutert. Dabei zeigt Figur 1 eine grobe Übersicht der erfindungsgemäßen Geberanordnung, in den Figuren 2 und 3 sind Impulsdiagramme sowie möglicherweise auftretende Kombinationen von Impulsen angegeben, wobei Figur 2 für einen Sechs-zylindermotor und Figur 3 für einen Achtzylindermotor gilt. In den Figuren 4 und 5 sind Impulsdiagramme zur Verdeutlichung der Notlauffunktion dargestellt.

## Beschreibung

In Figur 1 sind in einer groben Übersicht die wesentlichsten Elemente der vorliegenden Erfindung in Verbindung mit einer Erennkraftmaschinensteuerung dargestellt. Dabei ist mit 10 eine Geberscheibe bezeichnet, die starr mit der Kurbelwelle 11 der Brennkraftmaschine verbunden ist und an ihrem Umfang eine Vielzahl gleichartiger Winkelmarken 12 aufweist.

Neben diesen gleichartigen Winkelmarken 12 ist eine Bezugsmarke 13 vorgesehen, die im Ausführungsbeispiel nach Figur 1 durch zwei fehlende Winkelmarken gebildet wird.

Eine zweite Geberscheibe 14 ist mit der Nockenwelle 15 der Brennkraftmaschine verbunden und weist an ihrem Umfang unterschiedlich lange Segmente auf, wobei die kürzeren mit 17 und die längeren mit 16 bezeichnet sind. Zwischen diesen Segmenten sind Zwischenräume, wobei die kürzeren jeweils mit 19 und die längeren mit 18 bezeichnet sind.

Die Anzahl der Segmente 16, 17 ist so gewählt, daß sie gerade der Zylinderzahl n entspricht, die genaue Anordnung der Segmente wird an anderer Stelle beschrieben.

Die beiden Geberscheiben 10, 14 werden von Aufnehmern 20, 21, beispielsweise induktiven Aufnehmern oder hall-Sensoren abgetastet, die beim Vorbeilaufen der Winkelmarken bzw. der Segmente in den Aufnehmern erzeugten Signale werden einem Steuergerät 22 zugeführt und dort weiterverarbeitet. Die Geberscheibe 10 und der Aufnehmer 20 werden im folgenden als Nockenwellengeber bezeichnet, die Geberscheibe 14 und der Aufnehmer 21 als Kurbelwellengeber.

Das Steuergerät 22 erhält über Eingänge 23, 24, 25 weitere, für die Steuerung der Brennkraftmaschine erforderliche Eingangsgrößen, als Beispiel seien erwähnt ein Temperatursignal über den ngang 25, ein Lastsignal über den Eingang 24 und ein "Zündung ein"-Signal über den Eingang 23, mit 26 ist der zugehörige Zündschalter bezeichnet. Ausgangsseitig stellt das Steuergerät Signale für die Zündung und Einspritzung für nicht näher bezeichnete entsprechende Komponenten der Brennkraftmaschine zur Verfügung, die Ausgänge des Steuergerätes sind mit 27 und 28 bezeichnet.

In Figur 2 sind die von den Aufnehmern 20 und 21 gelieferten Signale, die im Steuergeräte ausgewertet werden, über den Kurbelwellenwinkel W bzw. über der Zeit T aufgetragen.

Im einzelnen ist in Figur 2a der Kurbelwellenwinkel während zweieinhalb Umdrehungen der Kurbelwelle aufgetragen, Figur 2b zeigt das Signal vom Nockenwellenaufnehmer und Figur 2c das Signal vom Kurbelwellenaufnehmer 21. Zusätzlich ist noch die OT-Lage der Zylinder 1 bis 6 und der TR-Impuls eingetragen, der bei jeder positiven Segmentflanke auftritt.

Damit der in Figur 2 dargestellte Signalzusammenhang erhalten wird, sind an das Gebersystem folgende Anforderungen zu stellen:

Die mit der Nockenwelle 15 verbundene Geberscheibe 14 wird so ausgeführt, daß das Nockenwellengebersignal im Zündabstand über eine erste Kurbelwellenumdrehung der Brennkraftmaschine lange Low-Phasen und kurze High-Phasen ergibt, mit negativer Flanke im Notlaufzündwinkel. Während der zweiten Umdrehung sollen lange High-Phasen und kurze Low-Phasen erhalten werden, ebenfalls mit negativer Flanke im Notlaufzündwinkel. Dazu ist das Geberrad so zu gestalten, daß auf drei lange Segmente 16 jeweils drei kurze Segmente 17 folgen, wobei zwischen den kurzen Segmenten jeweils lange Zwischenräume 18 liegen. und zwischen den langen Segmenten 16 jeweils kurze Zwischenräume 19 und zwischen den kurzen und langen Segmenten ein kurzer oder ein langer Zwischenraum ist.

Falls es wegen den Eigenschaften z.B. eines Hallgebers (zu frühes Einschalten an positiver und zu spätes Ausschalten an negativer Flanke) erforderlich ist, können die mechanischen kurzen Segmente des Geberrads kleiner gestaltet sein als die kurzen Zwischenräume, so daß im elektrischen Signal die kurzen Low- und die kurzen High-Phasen in etwa gleich lang sind. Figur 3b' zeigt dies prinzipiell.

Im übrigen ist das Gebersystem so auszulegen, daß im elektrischen Signal die kurzen High- und Low-Phasen gegenüber den langen High- und Low-Phasen möglichst kurz sind. Damit wird sichergestellt, daß bei einer Zeitauszählung auch im Dynamikfall, also bei Beschleunigung, ein ausreichender Unterschied zwischen der kurzen Zeit TK und der langen Zeit TL resultiert.

Das Ausführungsbeispiel nach Figur 1 ist so gestaltet, daß jeweils die Rückflanken der Signale nach Figur 2b bzw. entsprechend nach Figur 3b identische Abstände aufweisen. Ein Geberrad, bei dem die Längen der Segmente und der Zwischenräume vertauscht sind, würde Vorderflanken mit äquidistanten Abständen liefern.

Die Bezugsmarke 13 der Kurbelwellenscheibe 10 wird so angeordnet, daß die von ihr verursachte Impulslücke entweder innerhalb der vom mittleren langen Zwischenraum verursachten Low-Phase des Nockenwellengebersignales oder der vom mittleren langen Segment verursachten High-Phase des Nockenwellengebersignales auftritt.

Als Nockenwellenaufnehmer 21 kann ein statischer Aufnehmer verwendet werden, der auch bei stehender Brennkraftmaschine eine eindeutige Signalzuordnung liefert, es ist aber auch möglich, einen quasi statischen Geber zu verwenden, mit der Auswertung kann dann erst nach einem Flankenwechsel des Nockenwellengebersignales begonnen werden.

Auswertung im Normalbetrieb

Im Normalbetrieb, mit funktionierendem Kurbelwellen- und Nockenwellengeber wird nach dem Start bei jeder Winkelmarkenflanke des Kurbelwellengebersignales der Pegel des Nockenwellengebersignales abgefragt. Gleichzeitig werden im Steuergerät die vom Kurbelwellengeber gelieferten Winkelmarkenflanken gezählt. Aus der Anzahl der Winkelmarkenflanken bei gleichem Pegel kann nach einem bestimmten Winkel W erkannt werden, ob es sich um ein kurzes oder ein langes Segment oder einen kurzen oder einen langen Zwischenraum handelt.

Wird zusätzlich noch ein Sicherheitswinkel WS berücksichtigt, kann ein langes Segment beispielsweise nach einem Winkel W = WK + WS erkannt werden. Als Größe des Sicherheitswinkels ist ein Wert von etwa 18° KW sinnvoll.

Tritt nach einem Pegelübergang von Low nach High innerhalb von WK + WS ein erneuter Pegelwechsel auf, handelt es sich um eine kurze High-Phase, tritt bei vorhandenem Low-Pegel innerhalb von WK + WS kein Pegelwechsel auf, handelt es sich um eine lange Low-Phase.

Tritt einer dieser beiden Fälle auf, ist die Umdrehung 1 der Kurbelwelle erkannt. Für die Umdrehung 2 wird sinngemäß auf umgekehrte Polarität geprüft.

Es ist demnach bereits nach dem kurzen Winkel WK + WS bekannt, ob die erste oder die zweite Umdrehung der Kurbelwelle vorliegt. Es ist daher bereits nach diesem Winkel die Zylindergruppenerkennung abgeschlossen und eine erste Starteinspritzung für ausgewählte Zylinder dieser Zylindergruppe möglich.

Zur Zylindererkennung wird neben den Phasen des Nockenwellengebersignales zusätzlich noch das Auftreten der Bezugsmarke des Kurbelwellengebers untersucht. Dabei wird unterschieden, ob eine Bezugsmarke 13 bei Phasenpegel Low oder High auftritt. Durch diese Abfrage wird schon beim Stand der Technik die Zylindererkennung nach spätestens 390° KW realisiert.

Zur nun folgenden Erläuterung der beschleunigten Zylindererkennung ist es erforderlich, folgende Definitionen für die Phasen einzuführen:

| | |
|---|---|
| 1L: | lang Low |
| 1H: | lang High |
| kL: | kurz Low |
| kH: | kurz High |
| LB: | Low mit Bezugsmarke |
| HB: | High mit Bezugsmarke |
| 1LA: | lang Low Anfang |
| 1LmoB: | lang Low minimal ohne Bezugsmarke |
| 1HmoB: | lang High minimal ohne Bezugsmarke |
| 1Lg: | lang Low ganz |
| 1Hg: | lang High ganz |

Die so definierten Phasen können jeweils durch Auszählen einer bestimmten Zahl von Kurbelwellen-Winkelmarkenflanken ab oder bis zu einer, bzw. zwischen zwei Nockenwellensignalflanken ermittelt werden. Es werden nun soviele aufeinanderfolgende Phasen ausgewertet, bis eine eindeutige Zuordnung möglich ist.

Beginnt die Auswertung bei einem Kurbelwellenwinkel von ca. 480° (Grad), tritt beim aufgezeigten Ausführungsbeispiel als erste Phase lang Low (1L) auf. Die nächste Phase ist dann kurz High (kH) die übernächste lang Low mit Anfang (1LA). Beim angegebenen schwarzen Kreis ist dann die Synchronisation nach spätestens ca. 201° Drehwinkel abgeschlossen; die Zahlen nach den schwarzen Punkten bzw. Kreisen geben den jeweils größten Winkel an, bei dem die Synchronisation abgeschlossen ist.

Wird die Bezugsmarke immer dann erkannt, wenn beim Signal nach 2c auf einen kurzen Abstand ein langer und dann wieder ein kurzer folgt, ist die Bezugsmarke an der Stelle BM der Figur 2c erkannt.

Erfolgt der Drehbeginn in einer anderen Position, beispielsweise bei ca 550°, so daß die Auswertung mit der ersten kurzen High-Phase beginnt, tritt die in Zeile 2 der Figur 2d aufgetragene Phasenkombination ein, kurz High, Low mit Bezugsmarke. Entsprechende Kombinationen ergeben sich für anderen Drehbeginn bzw. Auswertebeginn, in Figur 2d sind all diese Kombinationsmöglichkeiten aufgetragen.

Ein Vergleich von den ab Drehbeginn aufeinanderfolgenden Phasen mit den in einem Speicher des Steuergeräts 22 abgelegten möglichen Kombinationen ermöglicht damit eine eindeutige Zuordnung, da keine dieser Kombinationen sich wiederholt. Im schlechtesten Fall ist damit eine Erfassung der KW-Stellung und eine Zylinderzuordnung nach ca. 200° KW möglich. Dazu wird zum Zeitpunkt einer erkannten Phasenfolge zur Festlegung der Kurbelwellenstellung eine von 0° bis 720° KW laufende Winkeluhr, die Bestandteil des Steuergerätes bzw. der Recheneinrichtung (µC) ist, auf den zugehörigen Wert gesetzt.

Bei einem sequentiellen Einspritzsystem wie es beispielsweise aus der DE-OS 36 23 041 bekannt ist, wobei eine Winkeluhr abläuft, kann somit je nach Stand der Winkeluhr und abhängig von der erfaßten Drehzahl und der berechneten Einspritzdauer die Einspritzung für die Ventile simultan erfolgen, bei denen das Einspritzende spätestens bei einem gewünschten Winkel des zugehörigen Zyklus, z.B. 30° KW vor "Einlaß schließt", liegt. Danach erfolgt die normale sequentielle Einspritzung.

Zur Erhöhung der Zuverlässigkeit der Zylindererkennung kann vor Beginn der Zündungsausgabe noch eine Plausibilitätsüberprüfung erfolgen, bei der nach erfolgter Zylindererkennung auch noch eine oder zwei der nachfolgenden Phasen herangezogen werden, weitere Plausibilitätsprüfungen sind möglich, in dem die Impulszahl des Kurbelwellensignales zwischen Bezugsmarke und nächster positiver Flanke des Nockenwellengebersignales ausgezählt wird. Da nach erfolgter Einspritzung das Gemisch erst angesaugt und verdichtet werden muß, kann cie Zündungsausgabe nach zusätzlicher Absicherung der Zylindererkennung etwas später erfolgen, ohne daß die Startdauer dadurch verlängert wird.

Eine Auswertung mit reduzierter Phasenanzahl und etwas längerer Synchronisationsdauer ist ebenfalls möglich. Insbesondere ist in Figur 2e ein vereinfachtes Verfahren angegeben, bei dem nur vier charakteristische Phasenfolgen ausgewertet werden.

In Figur 3 sind die Zusammenhänge für einen Achtzylindermotor dargestellt. Dabei weist die Nockenwellenscheibe entsprechend vier kurze und vier lange Segmente sowie vier kurze und vier lange Zwischenräume auf. Das vom Nockenwellengeber gelieferte Ausgangssignal ist in Figur 3b dargestellt, das Kurbenwellensignal nach Figur 3c ist identisch mit dem Kurbelwellensignal nach Figur 2.

In Figur 3d sind die Phasenbeziehungen aufgetragen für einen Beginn mit einer langen Low-Phase, der eine kurze High- und dann eine Low-Phase mit Bezugsmarke folgt (Zeile 1). In Zeile 2 ist die Phasenfolge aufgetragen, die erhalten wird bei einem Beginn mit einer kurzen High-Phase, es folgt dann als nächste Phase eine lange Low-Phase mit Bezugsmarke.

Wie den in der Figur 3d angegebenen Phasenfolge zu entnehmen ist, müssen einige der Kombinationen, die während einer Kurbelwellendrehung von 720 Grad auftreten können, vier Phasenfolgen ausgewertet werden, um eine eindeutige Zuordnung zu ermöglichen.

In Figur 3e ist wiederum eine vereinfachte Auswertung dargestellt. Durch günstigere Wahl der Bezugsmarke könnten auch hier die Winkelbereiche bis zur Synchronisation in etwa gleich groß ausgelegt werden.

Wird auf die vorstehend beschriebene beschleunigte Zylindererkennung verzichtet und die normale Zündungsausgabe nur nach erkannter Bezugsmarke in Verbindung mit dem Nockenwellengebersignal durchgeführt, wird eine beträchtliche Softwarevereinfachung erhalten, eine sofortige Zylindergruppenerkennung ist jedoch dennoch möglich.

Das Verfahren kann auf andere Zylinderzahlen sinngemäß übertragen werden.

In Figur 3b' sind die Nockenwellengeber Segmente eingezeichnet, die Länge dieser Segmente ist so gewählt, daß das in 3b gezeigte Signal erhalten wird, unter Berücksichtigung der bekannten Eigenschaft der Hall-Geber, die bereits etwas vor dem Auftreten der positiven Segmentflanke und etwas nach dem Auftreten der negativen Segmentflanke schalten.

Notlauf über Nockenwellengeber

Bei einem Ausfall des Kurbelwellengebersignales ist allein aus dem Nockenwellengebersignal eine Zylindererkennung möglich. Dazu werden die Zeiten zwischen den Nockenwellengeberflanken ausgezählt. Aus den einzelnen ausgezählten Folgen kann auch im Dynamikfall die Zylindererkennung ermöglicht werden, in Figur 4 ist die Vorgehensweise der Auswertung dargestellt. Die in Figur 4d angegebenen Folgen 1L, kH, kL, 1H bzw. die Folge kL, 1H, 1L, kH lassen durch Vergleich mit abgespeicherten Folgen eine eindeutige Zylindererkennung zu, denn beide Folgen treten während des Kurbelwellenwinkels von 720 Grad nur einmal auf und sind daher eindeutig.

Eine mögliche Abfrage für den zur Zylindererkennung im Notlauf erforderlichen Zeitvergleich, gegebenenfalls mit Absicherung, ist in Figur 5a, b angegeben, die Zeiten T1 bis T6 ermöglichen die Erkennung, unter der Voraussetzung, daß gilt:

$$T2 < T1/2 \text{ und } T3 < T4/2; T6/2 < T5$$

oder:

$$T1 < T2/2 \text{ und } T4 < T3/2; T5/2 < T6.$$

bzw.:

$$T2 < T1 \text{ und } T3 < T4; T6 < T5$$

oder:

$$T1 < T2 \text{ und } T4 < T3; T5 < T6.$$

Die Ausgabe der Zündung und Einspritzung im Notlauf kann nach einem Verfahren erfolgen, wie es beispielsweise in der DE-OS 40 05 123 beschrieben wird, dabei werden die jeweils in winkelfestem Abstand auftretenden negativen Flanken des Nockenwellengebersignales als Triggermarken genutzt.

Es ist weiterhin möglich, aus den winkelfesten Rückflanken des Nockenwellengebersignales softwaremäßig ein Signal zu generieren, das dem in Figur 4c aufgetragenen Kurbelwellengebersignal entspricht.

Bei einer invertierten NH-Geberscheibe könnten entsprechend die Vorderflanken ausgewertet werden.

## Patentansprüche

1. Geberanordnung einer Brennkraftmaschine mit Zylindererkennung mit n Zylindern, mit einer von der Kurbelwelle (11) angetriebenen Geberscheibe (10) mit einer Vielzahl von Winkelmarken (12) und wenigstens einer, einem festen Kurbelwellenwinkel zugeordneten, unterscheidbaren Bezugsmarke (13) und einer von der sich halb so schnell drehenden Nockenwelle (15) angetriebenen Geberscheibe (14), mit Segmenten (16, 17) mit zwei unterschiedlichen Längen und zwei unterschiedlich langen Zwischenräumen (18, 19) zwischen je zwei Segmenten (16, 17) und zwei, den Geberscheiben zugeordneten stationären Aufnehmern (20, 21), die in Abhängigkeit von den vorbeilaufenden Winkelmarken bzw. Segmenten Ausgangssignale mit Low- und High-Phasen abgeben, die in einem Steuergerät (22) ausgewertet werden, wobei die Anordnung der Segmente (16, 17) auf der von der Nockenwelle (15) angetriebenen Geberscheibe (14) so erfolgt, daß das Ausgangssignal des Aufnehmers (21) während der ersten Kurbelwellenumdrehung lange Low-Phasen und kurze High-Phasen enthält und während der zweiten Kurbelwellenumdrehung lange High- und kurze Low-Phasen und die besagte Anordnung der Segmente außerdem so erfolgt, daß die Abstände zwischen einer Art von Flanken der einen Phase gleich sind, daß die Zahl der Segmente (16, 17) der von der Nockenwelle (15) angetriebenen Geberscheibe (14) der Zylinderzahl n entspricht und daß die Lage der Bezugsmarke (13) auf der von der Kurbelwelle (11) angetriebenen Geberscheibe (10) so gewählt wird, daß das von ihr verursachte Signal während einer ersten Umdrehung der Kurbelwelle (11) mit einer Phase des Nockenwellensignales auftritt und während der zweiten Umdrehung der Kurbelwelle (11) mit der anderen Phase des Nockenwellensignales.

2. Geberanordnung nach Anspruch 1, dadurch gekennzeichnet, daß im Steuergerät (22) die Abfolge der Low- und High-Phasen der Ausgangssignale der beiden Aufnehmer (20, 21) erkannt wird und zur Zylindererkennung ein Vergleich mit abgespeicherten Abfolgen erfolgt und nach erfolgter Zylindererkennung eine Kurbelwellenstellung zugeordnet wird und/oder eine von 0° bis 720° KW laufende Winkeluhr auf den zugehörigen Wert gesetzt wird.

3. Geberanordnung nach Anspruch 2, dadurch gekennzeichnet, daß jeweils soviel Phasen zur Erkennung verwendet werden, daß eine eindeutige Zylinderzuordnung möglich ist.

4. Geberanordnung nach Anspruch 1, dadurch gekennzeichnet, daß die Segmente (16, 17) je zur Hälfte kurz und lang sind und diejenigen einer Art jeweils hintereinander angeordnet sind.

5. Geberanordnung nach einem der vorhergehenden Ansprüche, dadurch gekennzeichnet, daß die Flanken mit gleichen Abständen die Rückflanken der High-Phasen sind.

6. Geberanordnung nach einem der Ansprüche 1 bis 5, dadurch gekennzeichnet, daß bei Ausfall des Aufnehmers (21) auf Notlauf geschaltet wird und im Startfall der Schließbeginn mit anschließender Zündung und die Einspritzung mittels der Flanken mit gleichen Abständen gesteuert wird.

## Claims

1. Transmitter arrangement of an internal combustion engine having cylinder identification having n cylinders, having a transmitter disc (10) which is driven by the crankshaft (11) and has a multiplicity of angle marks (12) and at least one distinguishable reference mark (13), which is allocated to a fixed crankshaft angle, and a transmitter disc (14) which is driven by the camshaft (15), which rotates half as quickly, having segments (16, 17) having two different lengths and two interspaces (18, 19) of different length between two segments (16, 17) each and two stationary pick-ups (20, 21), which are allocated to the transmitter discs and transmit as a function of the angle marks or segments passing by output signals having low phases and high phases which are evaluated in a control unit (22), the arrangement of the segments (16, 17) being performed on the transmitter disc (14) driven by the camshaft (15) such that the output signal of the pick-up (21) contains during the first crankshaft revolution long low phases and short high phases and during the second crankshaft revolution, long high phases and short low phases, and the said arrangement of the segments is, moreover, performed such that the spacings between one type of edges of the one phase are the same, in that the number of segments (16, 17) of the transmitter disc (14) driven by the camshaft (15) corresponds to the cylinder number n, and in that the position of the reference mark (13) on the transmitter disc (10) driven by the crankshaft (11) is selected such that the signal caused by it occurs with one phase of the camshaft signal during a first revolution of the crankshaft (11), and with the other phase of the camshaft signal during the second revolution of the crankshaft (11).

2. Transmitter arrangement according to Claim 1, characterised in that in the control unit (22) the sequence of the low phases and high phases of the output signals of the two pick-ups (20, 21) is identified and a comparison with stored sequences is performed for the purpose of cylinder identification, and after the cylinder identification has been performed a crankshaft position is allocated and/or an angle clock running from 0° to 720° CrS is set to the associated value.

3. Transmitter arrangement according to Claim 2, characterised in that in each case as many phases are used for identification as render a unique cylinder allocation possible.

4. Transmitter arrangement according to Claim 1, characterised in that in each case half of the segments (16, 17) are short and half long and those of one type are arranged in each case one behind the other.

5. Transmitter arrangement according to one of the preceding claims, characterised in that the edges having the same spacings are the trailing edges of the high phases.

6. Transmitter arrangement according to one of Claims 1 to 5, characterised in that in the event of failure of the pick-up (21) a switch is made to emergency running, and in the case of starting the start of closure with subsequent ignition and the injection are controlled by means of the edges having the same spacings.

**Revendications**

1. Dispositif de capteur pour moteur à combustion interne à identification de cylindre, pour n cylindres, comprenant un disque de capteur (10) entraîné par le vilebrequin (11), ayant un grand nombre de repères d'angle (12) et au moins un repère de référence (13) distinct, associé de manière fixe à un angle de vilebrequin ainsi qu'un disque de capteur (14) entraîné à la moitié de la vitesse de rotation par l'arbre à came (15), rotatif, et comportant les segments (16, 17) ayant deux longueurs différentes et deux intervalles (18, 19) de longueurs différentes entre chaque fois deux segments (16, 17) ainsi que deux capteurs (20, 21) fixes associés au disque de capteur, et qui en fonction des repères d'angle des segments qui circulent, émettent des signaux de sortie avec des phases de niveau bas et de niveau haut, exploités par un appareil de commande (22), la disposition des segments (16, 17) sur le disque de capteur (14) entraîné par l'arbre à came (15) se fait pour que le signal de sortie du capteur (21) au cours de la première rotation du vilebrequin reçoive les phases longues de niveau bas et les phases courtes de niveau haut et pendant la seconde rotation du vilebrequin il reçoive en outre les phases longues de niveau haut et les phases courtes de niveau bas et l'association évoquée des segments est également telle que les intervalles entre un type de flanc d'une phase soient nuls, pour que le nombre des segments (16, 17) du disque de capteur (14) entraîné par l'arbre à came (15) corresponde au nombre de cylindres n et que la position du repère de référence (13) sur le disque de capteur (10) entraîné par le vilebrequin (11) soit choisie pour le signal qu'il provoque se présente pendant une première rotation du vilebrequin (11) avec une phase du signal d'arbre à came et pendant la seconde rotation du vilebrequin (11) avec l'autre phase du signal d'arbre à came.

2. Dispositif à capteur selon la revendication 1, caractérisé en ce que l'appareil de commande (22) reconnaît la suite des phases de niveau haut et de niveau bas des signaux de sortie des deux capteurs (20, 21) et effectue une comparaison avec des suites mises en mémoire pour reconnaître les cylindres et une fois cette reconnaissance effectuée, une position de vilebrequin et/ou une horloge d'angle circulant entre 0° et 720° de vilebrequin est mise sur la valeur correspondante.

3. Dispositif à capteur selon la revendication 2, caractérisé en ce qu' on utilise chaque fois suffisamment de phases pour l'identification pour permettre une association non équivoque des cylindres.

4. Dispositif à capteur selon la revendication 1, caractérisé en ce que les segments (16, 17) sont moitié plus courts et moitié plus longs que ceux des autres types, qui se suivent.

5. Dispositif à capteur selon l'une des revendications précédentes, caractérisé en ce que les flancs ont les mêmes intervalles que les flancs arrière des phases de niveau haut.

6. Dispositif de capteur selon l'une des revendications 1 à 5, caractérisé en ce qu' en cas de défaillance du capteur (21) on commute sur le fonctionnement de secours et en cas de démarrage, le début de la fermeture on commande l'allumage consécutif et l'injection à l'aide des flancs de même intervalle.

# FIG.1

FIG.2

EP 0 572 584 B1

FIG.3

# FIG. 4

a)

LOW ————————→ ←——— HIGH ———→

0°    120°   240°   360°   480°   600°   720°   120°   240°   360°

b)

←lL→ ←lH→ ←lH→ ←lL→

kH    kL        kL              kH

# FIG. 5

a)

lL      kH kL    lL

T1      T2  T3    T4      T5    T6

b)

T1  kL    lH      lL      kH

    T2        T3      T4

              T5        T6